# DEMANDE DE BREVET EUROPEEN

(11) **EP 1 243 845 A1**
(43) Date de publication de la demande: **25.09.2002**
(21) Numéro de dépôt: 02290614.3
(22) Date de dépôt: 12.03.2002
(51) Int. Cl.: F21S 8/12

(54) **Projecteur lumineux pour véhicule automobile, et dispositif de fixation d'une lampe pour un tel projecteur**

(30) Priorité: 21.03.2001 FR 0103852
(71) Demandeur: VALEO VISION, 93012 Bobigny Cédex (FR)
(72) Inventeur: Josquin, Daniel, 93012 Bobigny Cedex (FR)

(57) **Abrégé**

Projecteur lumineux pour véhicule, comprenant un boîtier (1) fermé vers l'avant par une optique transparente (2) et muni vers l'arrière d'un connecteur électrique (3) d'où partent, vers l'intérieur du boîtier, des conducteurs souples (4a, 4b, 4c) munis d' un contact (5) à leur extrémité éloignée du connecteur ; un réflecteur (8) monté réglable dans le boîtier et comportant à l'arrière une ouverture (9) ; une lampe (L) équipée d' un porte-lampe (22) qui peut être introduit de l'arrière dans le réflecteur (8) et y être fixé ; des moyens de connexion électrique pour établir une liaison entre les contacts (5) des conducteurs souples et des organes électriques (24a, 24b) du porte-lampe lors de sa fixation ; et un moyen de fermeture déformable (F) vers l'arrière. Le contact (5) situé à l'extrémité d'un conducteur (4a) est monté dans un support (38) lié au boîtier de manière mobile ; un moyen de maintien (12,17) de ce support relativement au réflecteur (8) est prévu, et le porte-lampe (22) est muni d' un élément de contact (27) propre à établir une liaison électrique avec le contact (5 ) lors de la fixation du porte-lampe (22) dans le réflecteur (8).

## Description

L'invention est relative à un projecteur lumineux pour véhicule, du genre de ceux qui comprennent un boîtier fermé vers l'avant par une optique transparente et muni vers l'arrière d'un connecteur électrique d'où partent, vers l'intérieur du boîtier, des conducteurs souples munis d' un contact à leur extrémité éloignée du connecteur ; un réflecteur monté réglable dans le boîtier et comportant à l'arrière une ouverture ; une lampe équipée d'un porte-lampe et munie de broches reliées à des organes électriques correspondants du porte-lampe, lequel peut être introduit de l'arrière dans le réflecteur et y être fixé ; des moyens de connexion électrique pour établir une liaison entre les contacts des conducteurs souples et les organes électriques du porte-lampe lors de sa fixation ; et un moyen de fermeture déformable pour obturer, vers l'arrière, un espace existant entre le boîtier et le porte-lampe.

Le réflecteur d'un tel projecteur est monté réglable relativement au boîtier. En particulier, un correcteur d'assiette peut être prévu pour maintenir automatiquement l'axe optique du réflecteur dans une direction souhaitée, malgré les variations d'assiette du véhicule qui se produisent lors du roulement et qui sont communiquées au boîtier. Il est donc nécessaire que la lampe du projecteur soit supportée par le réflecteur pour suivre les mouvements du réflecteur.

En outre, il est souhaitable que la mise en place de la lampe, notamment lors de son remplacement par un automobiliste, soit simple et ne nécessite pas plusieurs opérations de démontage d'une optique ou d'un capot, de déconnexion, dépôt et remontage.

Diverses solutions ont été proposées qui permettent le montage de la lampe depuis l'arrière du projecteur, avec un minimum d'opérations à effectuer.

Toutefois, les opérations d'assemblage du boîtier et du réflecteur, sur une ligne de fabrication, ne sont pas suffisamment simples et rapides.

L'invention a pour but, surtout, de fournir un projecteur lumineux pour véhicule qui, tout en permettant un remplacement aisé d'une lampe depuis l'arrière du projecteur, permette d'améliorer les conditions de montage et d'assemblage sur une ligne de fabrication.

Selon l'invention, un projecteur lumineux pour véhicule, du genre défini précédemment, est caractérisé par le fait que le contact situé à l'extrémité d'un conducteur éloignée du connecteur est monté dans un support lié au boîtier de manière mobile, qu'un moyen de maintien de ce support relativement au réflecteur est prévu, et que le porte-lampe est muni d' un élément de contact propre à établir une liaison électrique avec le contact monté dans le support lors de la fixation du porte-lampe dans le réflecteur, et le moyen de fermeture déformable est généralement constitué par un soufflet fixé au boîtier et comportant une ouverture traversée par le porte-lampe, et le support du contact est avantageusement prévu sur le soufflet en bordure de l'ouverture.

Chaque contact peut être monté dans une proéminence du bord de l'ouverture du soufflet, cette proéminence faisant saillie radialement vers le centre de l'ouverture et constituant le support du contact. Avantageusement, la proéminence est encliquetée dans une fenêtre d'une bague porte-lampe fixée au réflecteur, cette fenêtre formant le moyen de maintien de la proéminence.

Chaque contact peut être constitué d'une lamelle comportant à au moins une extrémité une languette recourbée sensiblement à angle droit propre à s'encliqueter dans une fente de la proéminence. De préférence, deux languettes sont prévues, une à chaque extrémité de la lamelle.

Le porte-lampe peut comporter deux lames diamétralement opposées s'étendant parallèlement à un diamètre, l'extrémité centrale d'une lame formant une douille de réception pour une broche de la lampe tandis que l'extrémité périphérique de la lame est recourbée suivant le contour circonférentiel du porte-lampe cylindrique et fait saillie radialement à travers une ouverture de ce contour du porte-lampe. Cette partie saillante de la lame est propre à venir en appui contre un contact lié au boîtier par rotation du porte-lampe relativement au boîtier. La fixation du porte-lampe sur le réflecteur est assurée avantageusement par un dispositif du type à baïonnette, avec ergots et échancrures.

L'invention est également relative à un dispositif de fixation et de connexion d'une lampe pour un projecteur lumineux tel que défini précédemment.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif. Sur ces dessins :
Fig.1 montre schématiquement en coupe verticale, avec parties arrachées, un projecteur lumineux pour véhicule selon l'invention.
Fig.2 est une vue en perspective, avec parties arrachées, d'un détail du projecteur de Fig.1, en cours de montage.
Fig.3 est une vue en élévation d'un contact.
Fig.4 est une vue partielle, de gauche par rapport à Fig.1, de la bague recevant le porte-lampe.
Fig.5, enfin, est une coupe verticale partielle du porte-lampe.

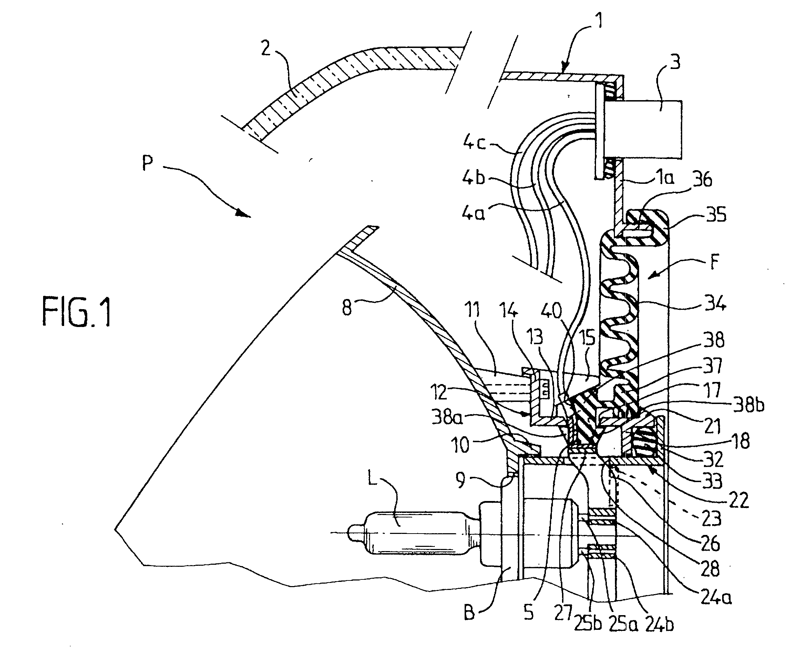

En se reportant à Fig.1, on peut voir un projecteur lumineux P pour véhicule qui comprend un boîtier 1 à paroi rigide, notamment en matière plastique, fermé vers l'avant par une optique transparente 2 partiellement représentée.

Le terme "avant" utilisé dans la description et les revendications désigne le sens suivant lequel est dirigée la lumière émise par le projecteur P. Sur Fig.1 "avant" désigne un sens dirigé de la droite vers la gauche. Le terme "arrière" désigne le sens opposé.

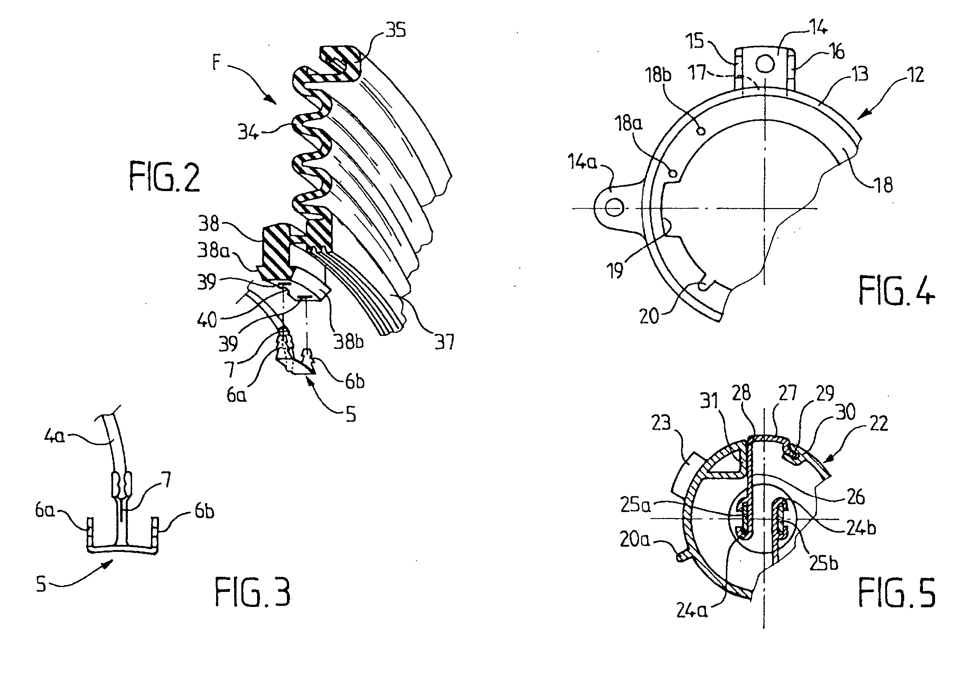

Le boîtier 1 est muni, sur sa paroi transversale arrière 1a, d'un connecteur électrique 3 d'où partent, vers l'intérieur du boîtier, des conducteurs souples 4a, 4b, 4c.... Chaque conducteur tel que 4a est muni, à son extrémité éloignée du connecteur 3, d'un contact électrique 5 illustré sur Figs.2 et 3. Le connecteur 3 peut recevoir, du côté extérieur du boîtier, une fiche de raccordement à une alimentation.

Chaque contact 5 est formé par une lamelle métallique cintrée, notamment en cuivre, comportant à chaque extrémité une languette 6a, 6b recourbée sensiblement à angle droit du côté opposé à la concavité du cintre. Les bords des languettes 6a, 6b peuvent être dentelés pour assurer un bon accrochage dans un logement dont il sera question plus loin. La lamelle 5 est en outre solidaire dans sa partie centrale, du côté opposé à la concavité du cintre, d'une cosse 7 pour sertissage sur l'extrémité du conducteur 4a.

Un réflecteur 8 est monté réglable dans le boîtier 1 à l'aide de moyens non représentés. Ces moyens peuvent notamment comprendre un correcteur d'assiette avec moteur électrique qui permet de maintenir l'axe optique du réflecteur 8 suivant une direction déterminée malgré les variations d'assiette du véhicule lors du roulement. Le réflecteur 8 est constitué d'un miroir concave, par exemple en forme de paraboloïde, et comporte à l'arrière une ouverture 9, dans sa partie centrale . La paroi du réflecteur 8 comporte en arrière une collerette 10 en saillie axiale. Au-delà de la collerette 10, le réflecteur 8 comporte sur sa paroi arrière des plots 11 de fixation répartis sur son pourtour .

Une bague 12, également visible sur Fig.4, est fixée sur les plots 11 par tout moyen approprié, par exemple ergot d'encliquetage, vis ou autre moyen. La bague 12 comprend un manchon cylindrique 13 qui comporte, vers l'avant, des oreilles 14, 14a, en saillie radiale vers l'extérieur, percées d'un trou, et réparties sur la périphérie pour fixation sur un plot 11 correspondant . L'oreille 14 est bordée, de chaque côté, par une aile 15, 16 perpendiculaire au plan de l'oreille 14. Les ailes 15, 16 ont un contour sensiblement en forme de triangle rectangle dont le côté supérieur est sensiblement parallèle à l'axe du manchon 13 et dont l'hypoténuse forme une rampe inclinée s'élevant vers l'arrière , en s'écartant radialement du manchon 13.

Entre les ailes 15 et 16, le manchon 13 comporte une fenêtre ou ajour 17. Vers son extrémité arrière, le manchon 13 comporte vers l'intérieur dans le sens radial une collerette circulaire 18. Pour une fixation du type à baïonnette, deux échancrures 19, diamétralement opposées, dont une seule est visible sur Fig.4, sont prévues dans la collerette 18 . Deux butées 18a, 18b, formées par exemple par des pions hémisphériques, font saillie sur la face avant de la collerette 18 et sont disposées de manière à déterminer une position de verrouillage. Une autre échancrure 20 de détrompage est prévue à distance des échancrures 19. L'extrémité arrière du manchon 13 comporte un rebord 21 en saillie vers l'extérieur.

Une lampe L est montée dans un porte-lampe 22 constitué d'un manchon cylindrique en matière isolante électriquement . Le porte-lampe 22 comporte à sa périphérie, vers l'extérieur, deux ergots 23 diamétralement opposés, dont un seul est visible sur Fig.5. Les ergots 23 sont prévus pour passer en translation axiale à travers les échancrures 19. L'écartement des butées 18a, 18b est légèrement supérieur à l'étendue angulaire d'un ergot 23 qui peut se loger et se verrouiller entre ces deux butées. Un ergot de détrompage 20a est prévu pour coopérer avec l'échancrure 20 au montage.

Le porte-lampe 22 est muni à l'intérieur du manchon d'organes électriques formés, dans l'exemple représenté, par des douilles plates 24a, 24b, symétriques par rapport à l'axe du manchon 22, propres à recevoir les broches plates 25a, 25b de la lampe L.

Comme visible sur Fig.5, chaque douille telle que 24a est prévue à une extrémité d'une lame métallique 26 dont le plan est parallèle à l'axe du porte-lampe 22. La lame 26 s'étend jusqu'à la périphérie du manchon 22 où elle est recourbée sensiblement à angle droit suivant une patte 27 logée dans une ouverture 28 prévue dans la paroi du manchon 22. La patte 27 est convexe vers l'extérieur suivant un rayon de courbure quasiment identique à celui de la paroi du manchon 22. La surface extérieure de la patte 27 fait saillie au-delà de la surface périphérique du manchon 22. L'extrémité 29 de la patte 27 éloignée de la lame 26 est recourbée vers l'intérieur suivant un bec engagé dans une rainure 30 prévue à l'intérieur du manchon 22. La face de la lame 26 située du côté opposé au bec 29 est en appui contre une cloison intérieure 31 solidaire du porte-lampe 22.

La lampe L comporte, sur son culot, une embase circulaire B (Fig.1) qui vient s'ajuster dans l'ouverture 9 du réflecteur, assurant le centrage de la lampe L par rapport au réflecteur. Le porte-lampe 22 est en outre guidé par la collerette 10 ajustée à son diamètre extérieur.

L'extrémité arrière du porte-lampe 22 comporte une collerette 32 en saillie radiale vers l'extérieur jusqu'à la hauteur du rebord 21. Un logement annulaire est ainsi délimité, comme visible sur Fig.1, entre la collerette 18, le rebord 21, la collerette 32 et le manchon 22 pour un joint annulaire d'étanchéité 33, comprimé axialement entre les collerettes 18 et 32.

En variante, la lampe L est équipée elle-même de son porte-lampe, comme c'est le cas par exemple pour une lampe à décharge.

Un moyen de fermeture déformable F est prévu pour obturer, vers l'arrière, l'espace entre le boîtier 1 et la bague 12. Le moyen de fermeture F est constitué d'un soufflet 34 dont le plan moyen est perpendiculaire à l'axe du boîtier 1, et dont la section par un plan radial, comme visible sur Fig.1, a une forme sinueuse. Le soufflet 34, également appelé bonnette, comporte sur son bord supérieur un repli 35 dont la concavité est tournée vers l'avant . Le repli 35 vient coiffer une collerette 36 cylindrique faisant saillie vers l'arrière autour d' une ouverture de la paroi 1a du boîtier 1. Le repli 35 comporte à l'intérieur des dents pour s'accrocher à la collerette 36.

Le soufflet 34 comporte une ouverture centrale délimitée par un bourrelet 37 muni de lèvres d'étanchéité sur sa surface intérieure qui viennent au contact de la surface extérieure du manchon 13.

Le bourrelet 37, en deux zones diamétralement opposées, est solidaire, vers l'avant, d'une proéminence 38 sensiblement en forme de parallélépipède faisant saillie radialement vers l'intérieur. La proéminence 38 comporte sur son bord avant et sur son bord arrière une nervure 38a, 38b de retenue dans la fenêtre 17 du manchon 13. La proéminence 38 est prévue pour permettre une fixation par encliquetage des nervures 38a, 38b . La surface des nervures tournée vers l'intérieur dans le sens radial est inclinée pour favoriser l'entrée de la proéminence 38 dans la fenêtre 17. La face extérieure, dans le sens radial, de la proéminence 38 est prévue pour coopérer avec le bord incliné des ailes 15, 16 . Deux fentes 39 sont prévues dans la proéminence 38 et débouchent vers l'axe géométrique du boîtier (voir Fig.2). Les fentes 39 servent de logements propres à recevoir les languettes d'accrochage 6a, 6b du contact 5 (Fig.3). Un dégagement 40 est ménagé dans la paroi avant de la proéminence 38 pour le passage de la cosse 7.

L'ensemble est prévu pour qu'après fixation de la proéminence 38 sur le manchon 13, le contact 5 se trouve en appui contre la patte 27 lorsque le porte-lampe 22 est verrouillé dans le manchon 13 et le réflecteur 8.

Ceci étant, l'assemblage d'un projecteur selon l'invention, et le remplacement d'une lampe, s'effectuent comme suit.

Le boîtier 1 est d'abord équipé de son connecteur 3 avec les conducteurs souples 4a, 4b, 4c munis de leurs contacts 5 . Le soufflet 34 est fixé sur la collerette 36 du boîtier et les contacts 5 sont fixés aux proéminences 38 par engagement des languettes 6a, 6b dans les fentes 39 de sorte que la face intérieure, dans le sens radial, de chaque proéminence 38 est recouverte par un contact 5.

On peut ainsi construire en toute indépendance un premier ensemble formé par le boîtier 1, le connecteur 3, le faisceau de conducteurs 4a, 4b, 4c et le soufflet 34 équipé des contacts 5.

Un second ensemble est préparé en fixant la bague 12 sur le réflecteur 8 à l'arrière de celui-ci.

On réunit ensuite les deux ensembles . Pour cela, on engage chaque proéminence 38 dans la fenêtre 17 correspondante de la bague 12. Les contacts 5 sont tournés vers l'axe du réflecteur 8 en saillie vers l'intérieur de la bague 12. Le réflecteur 8 est monté réglable dans le boîtier 1 par des moyens classiques non représentés.

On peut ensuite mettre en place le porte-lampe 22 équipé de la lampe L. A cet effet, on engage la lampe L dans l'ouverture 9 et le porte-lampe 22 dans la bague 12 en présentant l'ergot de détrompage 20a face à l'échancrure 20, et les ergots 23 face aux échancrures 19. On pousse l'ensemble du porte-lampe 22 suivant la direction axiale de manière à faire franchir la collerette 18 par les ergots 23 qui se trouvent alors en avant de cette collerette.

On fait ensuite tourner le porte-lampe relativement à la bague 12 dans le sens approprié, généralement le sens d'horloge , le joint 33 étant comprimé axialement. Lorsque les ergots 23 arrivent entre les butées 18a , 18b, le porte-lampe 22 est relâché et le joint 33 exerce un rappel vers l'arrière du porte-lampe 22 de sorte que les ergots 23 restent verrouillés en rotation entre les deux butées 18a, 18b .

Dans cette position, chaque patte 27 est en appui, suivant la direction radiale, contre un contact 5 correspondant de sorte que la connexion électrique de la lampe L est établie. La lampe L est correctement centrée dans le réflecteur 8 par son embase B reçue dans l'ouverture 9 tandis que le porte-lampe 22 est guidé par la collerette 10.

De préférence, la proéminence 38 comprise entre les ailes 15, 16 de la bague 12 et la patte 27 est mise en légère compression, ce qui assure une bonne liaison électrique entre le contact 5 et la patte 27. La liaison électrique utilise ainsi avantageusement la rémanence de la matière élastique, notamment du caoutchouc, de la proéminence 38.

Le remplacement d'une lampe L se déduit des explications qui précèdent. Il suffit de démonter le porte-lampe 22 en exerçant initialement une poussée axiale pour dégager les ergots 23 des butées 18a, 18b, puis de faire tourner le porte-lampe 22 en sens inverse d'horloge pour amener les ergots 23 au droit des échancrures 19 qui peuvent alors être traversées vers l'arrière, ce qui permet de dégager le porte-lampe 22 et de remplacer la lampe L. Le porte-lampe 22 ainsi équipé est ensuite remis en place.

La solution de l'invention permet, sur une ligne de fabrication, d'assurer une meilleure gestion des flux et de préparer séparément le premier ensemble du boîtier 1 avec le connecteur 3 et les contacts 5 pour son assemblage ultérieur avec le deuxième ensemble comprenant le réflecteur 8.

En variante, les contacts 5 pourraient être fixés sur des éléments flexibles solidaires du boîtier 1, issus de son injection, au lieu d'être installés sur le soufflet 34. Selon une autre possibilité, le soufflet 34 pourrait comporter une partie rigide pour supporter les contacts 5, cette partie étant rapportée ou obtenue par fabrication bi-matière.

## Revendications

1. Projecteur lumineux pour véhicule, comprenant un boîtier (1) fermé vers l'avant par une optique transparente (2) et muni vers l'arrière d'un connecteur électrique (3) d'où partent, vers l'intérieur du boîtier, des conducteurs souples (4a, 4b, 4c) munis d' un contact (5) à leur extrémité éloignée du connecteur ; un réflecteur (8) monté réglable dans le boîtier et comportant à l'arrière une ouverture (9) ; une lampe (L) équipée d'un porte-lampe (22) et munie de broches (25a, 25b) reliées à des organes électriques correspondants (24a, 24b) du porte-lampe, lequel peut être introduit de l'arrière dans le réflecteur (8) et y être fixé ; des moyens de connexion électrique pour établir une liaison entre les contacts (5) des conducteurs souples et les organes électriques (24a, 24b) du porte-lampe lors de sa fixation ; et un moyen de fermeture déformable (F) pour obturer, vers l'arrière, un espace existant entre le boîtier (1) et le porte-lampe (22),
**caractérisé par le fait que** le contact (5) situé à l'extrémité d'un conducteur (4a) éloignée du connecteur (3) est monté dans un support (38) lié au boîtier de manière mobile, qu'un moyen de maintien (12,17) de ce support (38) relativement au réflecteur (8) est prévu, et que le porte-lampe (22) est muni d' un élément de contact (27) propre à établir une liaison électrique avec le contact (5 ) monté dans le support (38) lors de la fixation du porte-lampe (22) dans le réflecteur (8), et en ce que le moyen de fermeture déformable (F) est constitué par un soufflet (34) fixé au boîtier (1) et comportant une ouverture traversée par le porte-lampe (22), et que le support (38) du contact est prévu sur le soufflet en bordure (37) de l'ouverture.

2. Projecteur lumineux selon la revendication 1, **caractérisé par le fait que** le support de contact est formé par une proéminence (38) du bord (37) de l'ouverture du soufflet, cette proéminence (38) faisant saillie radialement vers le centre de l'ouverture.

3. Projecteur lumineux selon la revendication 2, **caractérisé par le fait que** la proéminence (38) est encliquetée dans une fenêtre (17) d'une bague (12) fixée au réflecteur.

4. Projecteur lumineux selon la revendication 3 , **caractérisé par le fait que** le porte-lampe (22) est fixé sur la bague (12) par un dispositif du type à baïonnette, avec ergots (23) et échancrures (19).

5. Projecteur lumineux selon l'une des revendications 2 à 4, **caractérisé par le fait que** chaque contact (5) est constitué d'une lamelle comportant à au moins une extrémité une languette (6a, 6b) recourbée sensiblement à angle droit, propre à se loger dans une fente (39) de la proéminence.

6. Projecteur lumineux selon la revendication 5, **caractérisé par le fait que** deux languettes (6a, 6b) sont prévues, une à chaque extrémité de la lamelle (5).

7. Projecteur lumineux selon l'une des revendications précédentes, **caractérisé par le fait que** le porte-lampe (22) comporte deux lames (26) diamétralement opposées s'étendant parallèlement à un diamètre, l'extrémité centrale d'une lame formant une douille (24a, 24b) de réception pour une broche (25a, 25b) de la lampe tandis que l'extrémité périphérique de la lame est recourbée (27) suivant le contour circonférentiel du porte-lampe cylindrique et fait saillie radialement à travers une ouverture (28) de ce contour.

8. Dispositif de fixation et de connexion d'une lampe pour un projecteur lumineux selon l'une des revendications précédentes, comprenant un porte-lampe (22) propre à être fixé au réflecteur (8), **caractérisé par le fait que** le porte-lampe (22) comporte deux lames (26) diamétralement opposées s'étendant parallèlement à un diamètre, l'extrémité centrale d'une lame formant une douille (24a, 24b) de réception pour une broche (25a, 25b) de la lampe tandis que l'extrémité périphérique de la lame est recourbée (27) suivant le contour circonférentiel du porte-lampe cylindrique et fait saillie radialement à travers une ouverture (28) de ce contour.

9. Dispositif de fixation et de connexion d'une lampe pour un projecteur lumineux selon la revendication 8, **caractérisé par le fait qu'**il comprend une bague (12) destinée à être fixée au réflecteur, et que le porte-lampe (22) est fixé sur la bague (12) par un dispositif du type à baïonnette, avec ergots (23) et échancrures (19).
